# EUROPEAN PATENT APPLICATION

(11) **EP 3 115 139 A1**
(43) Date of publication of application: **11.01.2017**
(21) Application number: 16177883.2
(22) Date of filing: 05.07.2016
(51) Int. Cl.: B23H 1/10

(54) **WORKING FLUID SUPPLY DEVICE FOR ELECTRICAL DISCHARGE MACHINE**

(30) Priority: 10.07.2015 JP 2015138466
(71) Applicant: FANUC CORPORATION, Oshino-mura Minamitsuru-gun Yamanashi 401-0597 (JP)
(72) Inventor: YOSHIZAKI, Daisuke, Minamitsuru-gun, Yamanashi 401-0597 (JP)
(74) Representative: Ward, James Norman

(57) **Abstract**

A working fluid supply device for an electrical discharge machine is provided with a first liquid circuit configured to supply clean water (working fluid) drawn up from a clean water tank to a machining tank and a second liquid circuit configured to supply the working fluid to an ion-exchange resin and a cooler. The controller is configured to open or close a first valve provided in the first liquid circuit and a second valve provided in that part of the second liquid circuit through which the working fluid is supplied to the ion-exchange resin, thereby switching the supply of the working fluid to the first and second liquid circuits.

## Description

### BACKGROUND OF THE INVENTION

### Field of the Invention

The present invention relates to a working fluid supply device for an electrical discharge machine.

### Description of the Related Art

A wire electrical discharge machine is a machine tool that performs machining by causing electrical discharge between a wire electrode and a workpiece through a working fluid. A working fluid supply device for the wire electrical discharge machine is a device configured to perform cleaning of the working fluid, adjustment to suitable electrical resistance and temperature for machining with the working fluid, and supply of the working fluid to a machining tank of the electrical discharge machine.

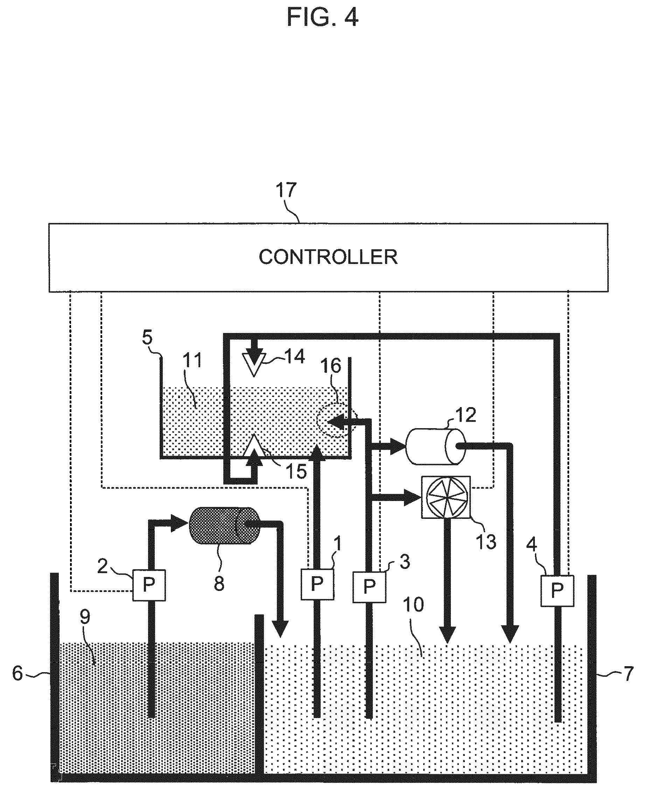

A conventional working fluid supply device will first be described with reference to FIG. 4. In the description below, only those elements which are related to the working fluid supply device for an electrical discharge machine are illustrated, and the illustration of a wire electrode, stretching structure for the wire electrode, workpiece, and the like is omitted.

Normally, electrical discharge machining is performed with the workpiece immersed in a working fluid, by drawing up clean water 10 from a clean water tank 7 by means of a water supply pump 1 and supplying it to and storing it as the working fluid in the machining tank 5. In order to quickly store the water into the machining tank 5, the water supply pump 1 requires performance for high flow-rate supply.

When the electrical discharge machining is performed, the working fluid in the machining tank 5 is contaminated by resulting machining chips. If the machining chips exist between the wire electrode and the workpiece, the machining is destabilized. In order to stabilize the machining, therefore, the clean water 10 as a clean working fluid continues to be injected through nozzles 14 and 15 by a working fluid pump 4 during the machining so that the space between the wire electrode and the workpiece can continue to be filled with the clean working fluid suitable for machining. In order to reliably supply the working fluid to the narrow gap between the wire electrode and the workpiece, it is necessary to jet the working fluid at high pressure. Accordingly, the working fluid pump 4 requires performance to supply the working fluid at high pressure.

The working fluid contaminated by the machining chips is returned as sewage 9 to a sewage tank 6 through a pipe (not shown). As the sewage 9 in the sewage tank 6 is pressure-fed to a filter 8 by a filter pump 2, it becomes a clean working fluid cleared of the machining chips.

Since the accuracy of electrical discharge machining changes depending on the temperature and electrical resistance of the working fluid, stable machining cannot be achieved with the merely clean working fluid cleared of the machining chips. Therefore, the clean water 10 in the clean water tank 7 is adjusted to be the working fluid suitable for machining by being drawn up by a circulation pump 3 and returned to the clean water tank 7 after it is fed to an ion-exchange resin 12 for adjusting the electrical resistance of the working fluid and a cooler 13 for adjusting the temperature. In order to prevent contamination of each sealing mechanism part 16 of the machining tank 5, moreover, the circulation pump 3 also has the function of directly feeding the clean water 10 as the clean working fluid into the machining tank 5, thereby continuing to supply the working fluid to the machining tank 5.

As described above, the conventional working fluid supply device for the wire electrode electrical discharge machine requires the use of a large number of pumps. If the number of pumps increases, however, the mounting space and the number of necessary parts, including controllers and wirings as well as the pumps, increase. The increase in the parts count of the working fluid supply device results in an increase in the failure rate and entails or requires high costs and a wide space.

As shown in FIG. 5, Japanese Patent Application Laid-Open No. 2014-061574 discloses a working fluid supply device in which a first liquid circuit configured to supply clean water 10 to a machining tank 5 and a second liquid circuit configured to supply the working fluid to an ion-exchange resin 12 and a cooler 13 are connected to one and the same pump 18 so that first and second valves 19 and 20 provided in the first and second liquid circuits can be on/off-controlled. In this working fluid supply device, the number of pumps used can be reduced in such a manner that the single pump combines the function of storing the working fluid in the machining tank with the function of adjusting the working fluid to be suitable for machining.

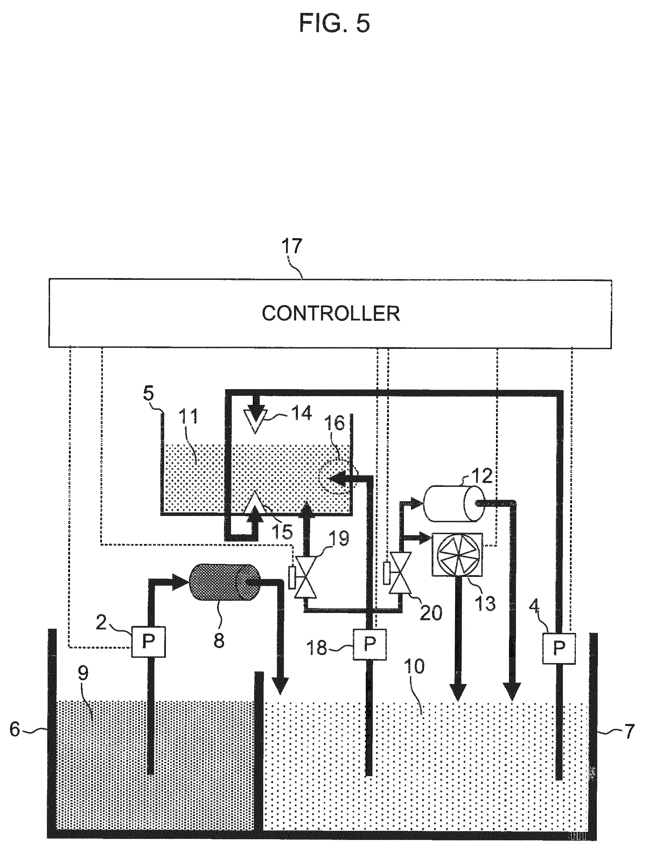

In the conventional working fluid supply device shown in FIG. 5, however, the working fluid inevitably ceases to flow into the second liquid circuit (the second valve 19) while the clean water 10 (working fluid) is being passed to the first liquid circuit (the first valve 20) and stored in the machining tank 5. Nevertheless, this second liquid circuit comprises the cooler 13 for the working fluid, and if the working fluid supply to the cooler 13 is stopped, the working fluid in the cooler 13 is super-cooled, possibly resulting in a failure of the cooler 13. In this working fluid supply device, therefore, the cooler 13 is stopped when the working fluid supply thereto is stopped, while the cooler 13 is operated again when the supply is resumed, thereby avoiding super-cooling of the working fluid in the cooler 13.

The working fluid supply device shown in FIG. 5 enables a reduction in the number of pumps without causing a failure of the cooler. However, the working fluid cooler 13 frequently uses a refrigerant and a compressor, and a pressure difference is inevitably produced in a refrigerant pipe once the compressor is stopped. If an attempt is made to drive the compressor under the pressure difference in starting the cooler, a high load is normally applied to the compressor, resulting in a failure. Generally, in starting the cooler 13, therefore, it is necessary to normally drive the cooler after the compressor is driven at low load for several minutes to make the pressure in the refrigerant pipe constant.

Thus, in operating the cooler 13 again, there is generally an inevitable period of several minutes during which normal drive is prohibited. If machining is performed before the cooler 13 is normally driven, the cooler cannot properly perform cooling even when the temperature of the working fluid is increased. Thus, the machining is performed with the working fluid not adjusted in temperature, possibly causing problems in molding stability and accuracy.

### SUMMARY OF THE INVENTION

Accordingly, the object of the present invention is to provide a working fluid supply device for an electrical discharge machine such that the number of pumps used can be reduced to achieve cost reduction and space saving without reducing the reliability and performance.

A working fluid supply device for an electrical discharge machine according to the present invention is configured to supply a working fluid to a machining tank of the electrical discharge machine for machining a workpiece in the machining tank and comprises a pump configured to draw up the working fluid from a clean water tank, a first liquid circuit configured to supply the working fluid drawn up by the pump to the machining tank, a second liquid circuit configured to supply the working fluid to each of an ion-exchange resin and a cooler, a first valve provided in the first liquid circuit, a second valve provided in that part of the second liquid circuit through which the working fluid is supplied to the ion-exchange resin, and a controller configured to open or close the first and second valves to switch the supply of the working fluid to the first and second liquid circuits.

The working fluid supply device for an electrical discharge machine may further comprise a third valve provided in that part of the second liquid circuit through which the working fluid is supplied to the cooler, and the controller may be configured to open or close the first, second, and third valves to switch the supply of the working fluid to the first and second liquid circuits.

The working fluid supply device for an electrical discharge machine may further comprise a third liquid circuit configured to supply the working fluid from the cooler to the clean water tank, a fourth liquid circuit configured to supply the working fluid from the cooler to the machining tank, a fourth valve provided in the third liquid circuit, and a fifth valve provided in the fourth liquid circuit, and the controller may be configured to open or close the first, second, fourth and fifth valves to switch the supply of the working fluid to the first, second, third, and fourth liquid circuits.

According to the present invention, a working fluid supply device for an electrical discharge machine can be provided such that the number of pumps used can be reduced to achieve cost reduction and space saving without reducing the reliability and performance.

### BRIEF DESCRIPTION OF THE DRAWINGS

The above and other objects and features of the present invention will be obvious from the ensuing description of embodiments with reference to the accompanying drawings, in which:
FIG. 1 is a schematic diagram of a working fluid supply device according to a first embodiment of the present invention;
FIG. 2 is a schematic diagram of a working fluid supply device according to a second embodiment of the present invention;
FIG. 3 is a schematic diagram of a working fluid supply device according to a third embodiment of the present invention;
FIG. 4 is a schematic diagram of a conventional working fluid supply device; and
FIG. 5 is a schematic diagram of a working fluid supply device disclosed in a prior art document.

### DETAILED DESCRIPTION OF THE PREFERRED EMBODIMENTS

Some embodiments of the present invention will now be described with reference to the accompanying drawings. Like reference numerals are used to designate those components identical or similar to their prior art counterparts shown in FIGS. 4 and 5.

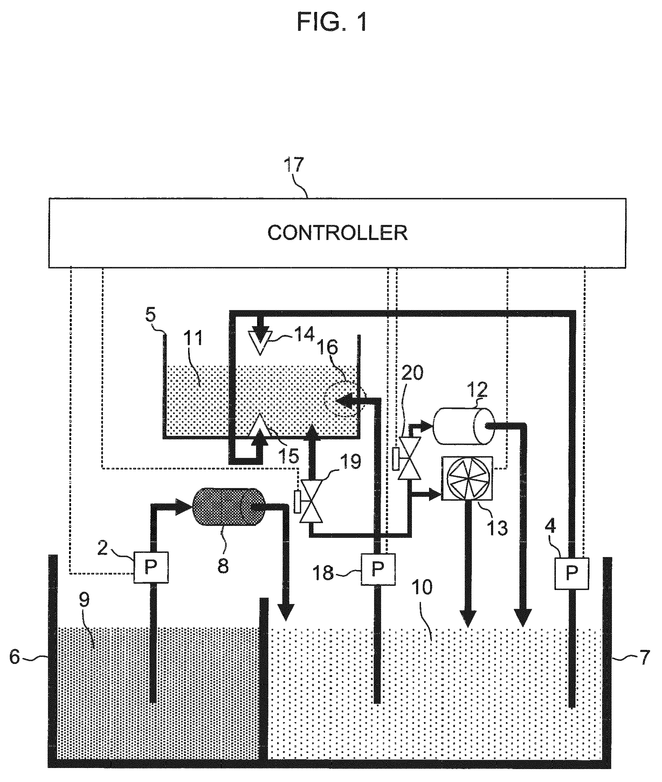

First, a working fluid supply device according to a first embodiment will be described with reference to FIG. 1.

The working fluid supply device according to this embodiment comprises a water supply/circulation pump 18 configured to draw up clean water 10 from a clean water tank 7, a first liquid circuit configured to supply the clean water 10 drawn up by the water supply/circulation pump 18 to a machining tank 5, a first valve 19 provided in the first liquid circuit, a second liquid circuit configured to supply the clean water 10 to each of an ion-exchange resin 12 and a cooler 13, a second valve 20 provided in that part of the second liquid circuit through which the clean water 10 is supplied to the ion-exchange resin 12, and a controller 17.

This controller performs opening-closing control of each of the first and second valves 19 and 20 in the first and second liquid circuits, drivingly controls a filter pump 2, working fluid pump 4, and water supply/circulation pump 18, and further drivingly controls the cooler 13.

In storing a working fluid in the machining tank 5, the second and first valves 20 and 19 are closed and opened, respectively, so that the working fluid is supplied to the machining tank 5, and the working fluid is also supplied to the cooler 13. In supplying the working fluid suitable for machining to the clean water tank 7 with electrical resistance and temperature adjusted, without storing the working fluid in the machining tank 5, in contrast, the first and second valves 19 and 20 are closed and opened, respectively, so that the clean water drawn up by the water supply/circulation pump 18 is supplied to the ion-exchange resin 12 and the cooler 13 and returned to the clean water tank 7.

In this way, the working fluid supply device is implemented such that the problem that the working fluid supply to the cooler 13 is stopped when the water is collected can be solved and the number of pumps used can be reduced.

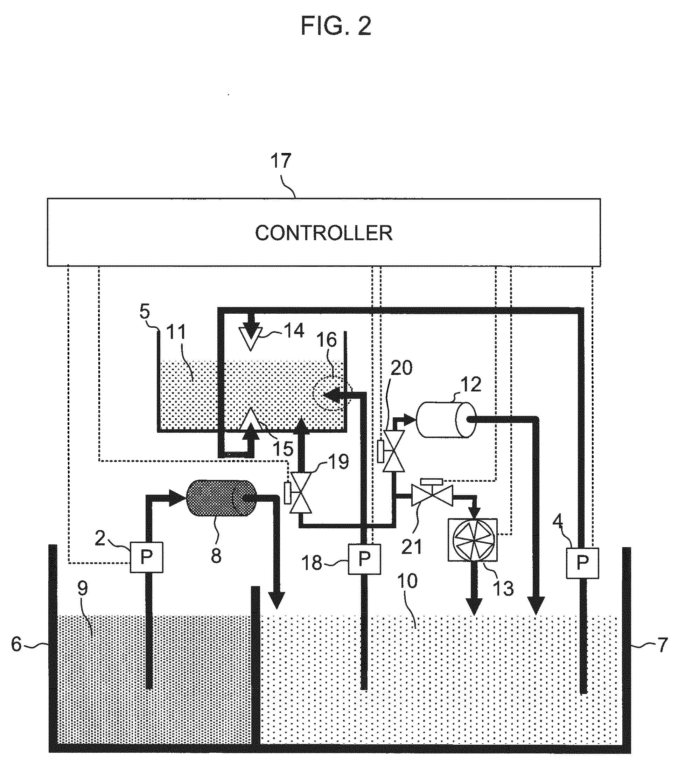

A working fluid supply device according to a second embodiment of the present invention will now be described with reference to FIG. 2.

The working fluid supply device according to the first embodiment (FIG. 1) is constructed so that the working fluid supplied to the cooler 13 can be returned to the clean water tank 7 even during the water collection into the machining tank 5. This may cause a problem that the flow rate of the working fluid supplied to the machining tank 5 is reduced by a margin corresponding to the supply to the cooler 13.

To overcome this problem, in the working fluid supply device according to this embodiment, the flow rate of a working fluid supplied to a machining tank 5 is adjusted by adjusting the flow rate of the working fluid supplied to a cooler 13.

The working fluid supply device according to this embodiment comprises a water supply/circulation pump 18 configured to draw up clean water 10 from a clean water tank 7, a first liquid circuit configured to supply the clean water 10 drawn up by the water supply/circulation pump 18 to the machining tank 5, a first valve 19 provided in the first liquid circuit, a second liquid circuit configured to supply the clean water 10 to each of an ion-exchange resin 12 and the cooler 13, a second valve 20 provided in that part of the second liquid circuit through which the clean water 10 is supplied to the ion-exchange resin 12, a third valve 21 provided in that part of the second liquid circuit through which the clean water 10 is supplied to the cooler 13, and a controller 17.

The controller 17 performs opening-closing control of each of the first and second valves 19 and 20 in the first and second liquid circuits, drivingly controls a filter pump 2, working fluid pump 4, and water supply/circulation pump 18, and further drivingly controls the cooler 13.

In supplying the working fluid to the machining tank 5, the second and first valves 20 and 19 are closed and opened, respectively, and moreover, the third valve 21 is throttled so that the flow rate of the working fluid supplied to the cooler 13 is reduced. The flow rate of the working fluid supplied to the cooler 13 can be reduced to such a value that the cooler 13 never undergoes super-cooling.

In supplying the working fluid suitable for machining to the clean water tank 7, furthermore, the second and third valves 20 and 21 are opened and the first valve 19 is closed so that the working fluid is supplied to each of the ion-exchange resin 12 and the cooler 13 and returned to the clean water tank 7. In this way, the working fluid supply device capable of reducing the reduction of the flow rate of the working fluid supplied to the machining tank 5 can be achieved.

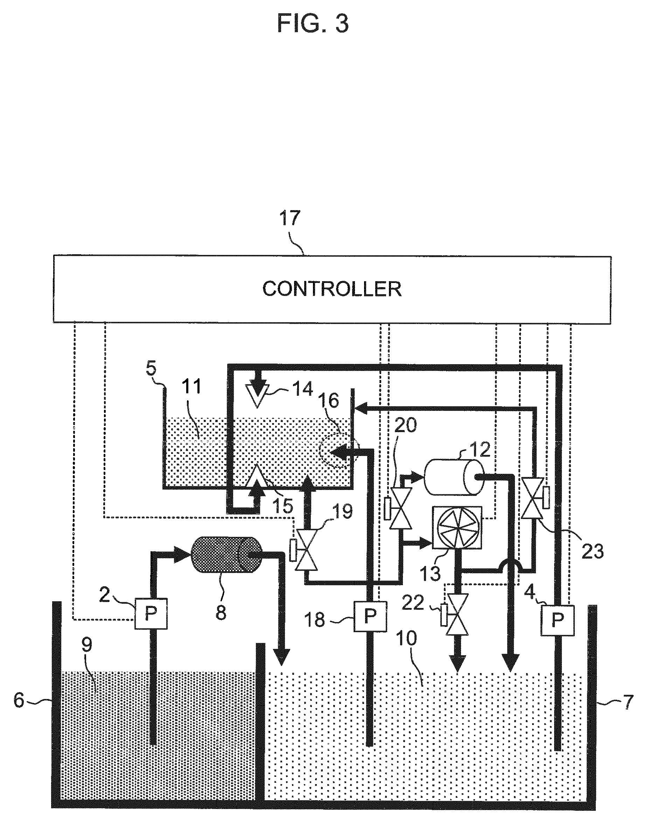

A working fluid supply device according to a third embodiment of the present invention will now be described with reference to FIG. 3.

In the working fluid supply device according to this embodiment, all of a working fluid drawn up by a water supply/circulation pump 18 is already supplied to a machining tank 5 before water collection.

The working fluid supply device according to this embodiment comprises the water supply/circulation pump 18 configured to draw up clean water 10 from a clean water tank 7, a first liquid circuit configured to supply the clean water 10 drawn up by the water supply/circulation pump 18 to the machining tank 5, a first valve 19 provided in the first liquid circuit, a second liquid circuit configured to supply the clean water 10 to each of an ion-exchange resin 12 and a cooler 13, a second valve 20 provided in the second liquid circuit, a third liquid circuit for returning the working fluid subjected to temperature adjustment after passing through the cooler 13 to the clean water tank 7, a fourth valve 22 provided in the third liquid circuit, a fourth liquid circuit for supplying the working fluid subjected to the temperature adjustment after passing through the cooler 13 to the machining tank 5, a fifth valve 23 provided in the fourth liquid circuit, and a controller 17.

The controller 17 performs opening-closing control of the first, second, fourth, and fifth valves 19, 20, 22 and 23 in the first, second, third, and fourth liquid circuits.

In storing the working fluid in the machining tank 5, the second and fourth valves 20 and 22 are closed and the first and fifth valves 19 and 23 are opened so that the clean water 10 drawn up by the water supply/circulation pump 18 is supplied to the machining tank 5 through the first liquid circuit connecting with the machining tank 5 and the fourth liquid circuit for supplying the working fluid subjected to the temperature adjustment after passing through the cooler 13 to the machining tank 5.

In supplying the working fluid suitable for machining to the clean water tank 7 with adjusted electrical resistance and temperature without storing the working fluid in the machining tank 5, in contrast, the first and fifth valves 19 and 23 are closed and the second and fourth valves 20 and 22 are opened so that the clean water 10 drawn up by the water supply/circulation pump 18 is supplied to the second and third liquid circuits, whereby the clean water 10 is supplied to the ion-exchange resin 12 and the cooler 13 and returned to the clean water tank 7.

In this way, the working fluid supply device is implemented such that all the working fluid drawn up by the water supply/circulation pump 18 can be supplied to the machining tank 5 during water collection, the problem that the working fluid supply to the cooler 13 is stopped is solved, and the number of pumps used can is reduced. Thus, by using the embodiments of the present invention, the number of pumps used in the working fluid supply device can be reduced to achieve cost reduction and space saving without reducing the reliability and performance.

While embodiments of the present invention have been described herein, the invention is not limited to the above-described embodiments and may be suitably modified and embodied in various forms.

## Claims

1. A working fluid supply device for an electrical discharge machine configured to supply a working fluid to a machining tank of the electrical discharge machine for machining a workpiece in the machining tank, the working fluid supply device comprising:
a pump configured to draw up the working fluid from a clean water tank;
a first liquid circuit configured to supply the working fluid drawn up by the pump to the machining tank;
a second liquid circuit configured to supply the working fluid to each of an ion-exchange resin and a cooler;
a first valve provided in the first liquid circuit;
a second valve provided in that part of the second liquid circuit through which the working fluid is supplied to the ion-exchange resin; and
a controller configured to open or close the first and second valves to switch the supply of the working fluid to the first and second liquid circuits.

2. The working fluid supply device for an electrical discharge machine according to claim 1, further comprising a third valve provided in that part of the second liquid circuit through which the working fluid is supplied to the cooler, wherein the controller is configured to open or close the first, second, and third valves to switch the supply of the working fluid to the first and second liquid circuits.

3. The working fluid supply device for an electrical discharge machine according to claim 1, further comprising a third liquid circuit configured to supply the working fluid from the cooler to the clean water tank, a fourth liquid circuit configured to supply the working fluid from the cooler to the machining tank, a fourth valve provided in the third liquid circuit, and a fifth valve provided in the fourth liquid circuit, wherein the controller is configured to open or close the first, second, fourth and fifth valves to switch the supply of the working fluid to the first, second, third, and fourth liquid circuits.
